# FASCICULE DE BREVET EUROPEEN

(11) **EP 0 569 279 B1**
(45) Date de publication et mention de la délivrance du brevet: **18.09.1996**
(21) Numéro de dépôt: 93401138.8
(22) Date de dépôt: 03.05.1993
(51) Int. Cl.: H02J 7/14

(54) **Dispositif d'alimentation électrique sous tension élevée d'un circuit auxiliaire d'un véhicule automobile**
Vorrichtung zur Stromversorgung eines Hilfstromkreises eines Kraftfahrzeuges mit erhöhter Spannung
Elevated tension electrical power supply for feeding an auxiliary circuit of a motor vehicle

(30) Priorité: 07.05.1992 FR 9205648
(43) Date de publication de la demande: 10.11.1993
(73) Titulaire: VALEO EQUIPEMENTS ELECTRIQUES MOTEUR, 94000 Créteil (FR)
(72) Inventeur: Perrier, Pierre, F-75013 Paris (FR); Pierret, Jean-Marie, F-75012 Paris (FR); Brandy, Frédéric, F-94250 Gentilly (FR)
(74) Mandataire: Gamonal, Didier

(56) Documents cités:
- EP-A- 0 286 510
- EP-A- 0 338 926
- EP-A- 0 390 698
- EP-A- 0 426 345

## Description

La présente invention concerne un dispositif d'alimentation électrique sous tension élevée d'un circuit auxiliaire d'un véhicule automobile.

Les circuits électriques d'un véhicule automobile sont habituellement alimentés par une batterie d'accumulateurs chargée par un alternateur dont le courant d'excitation est régulé par un régulateur.

Si une telle configuration permet d'alimenter sous tension nominale les organes classiques tels que la ventilation, l'éclairage par incandescence ..., le problème reste entier quand il s'agit d'alimenter sous une tension supérieure un circuit auxiliaire constitué par exemple par l'élément chauffant d'un pare-brise et/ou d'une lunette arrière électrique assurant le dégivrage et/ou le désembuage le plus rapidement possible.

Par ailleurs les véhicules actuels tendent à consommer de plus en plus d'énergie électrique par exemple pour le chauffage, la climatisation ou l'éclairage par lampe à décharge.

Autrement dit l'alternateur doit non seulement être capable de délivrer en marche normale une puissance de plus en plus élevée sous tension réseau nominale mais en plus doit pouvoir fournir, de manière temporaire, à certains équipements auxiliaires tels que ceux précités un régime de tension élevée pouvant atteindre 5 à 6 fois la valeur de la tension réseau nominale.

Pour résoudre ces problèmes on a proposé d'équiper l'alternateur de deux enroulements stators identiques.

Ces enroulements stators sont associés à des moyens de commutation permettant de les connecter en série ou en parallèle pour engendrer une tension réseau nominale lors de la commutation en parallèle, ou une tension réseau élevée, lors de la commutation en série.

Un alternateur de ce type ne possédant qu'un enroulement rotorique, les variations de l'excitation de l'alternateur ne peuvent s'opérer qu'à partir d'un seul régulateur.

Un tel dispositif décrit par exemple dans le document FR-A-2 620 280 nécessite d'une part des moyens de commutation permettant de modifier via le régulateur, les conditions d'excitation de l'alternateur, de manière à pouvoir mettre ce dernier en régime de surexcitation lorsqu'un dégivrage est enclenché, d'autre part des moyens permettant de maintenir sur le circuit principal une tension nominale constante, même lorsque l'alternateur est en régime de surexcitation. Cette dernière condition oblige de constituer les ponts redresseurs des enroulement statoriques au moins en partie avec des éléments redresseurs commandés tels que des thyristors de manière à pouvoir commander leur angle de conduction et maintenir ainsi la tension réseau du circuit principal à sa valeur nominale quel que soit le régime de fonctionnement de l'alternateur.

Les redresseurs commandés associés aux moyens précités ont pour résultat une réalisation complexe de l'ensemble du dispositif et augmentent son coût de manière prohibitive.

De plus, un tel dispositif nécessite des moyens complémentaires de sécurité pour qu'en régime de surexcitation, la batterie ne soit pas en situation de surcharge, par exemple lorsque l'aiguillage de l'énergie électrique ne s'est pas effectué correctement et que la liaison sortie redressée alternateur-batterie est maintenue, ce qui peut entraîner des conséquences dangereuses telles que par exemple destruction des lampes du véhicule, risque d'incendie ou même d'explosion de la batterie, moyens complémentaires qui ne peuvent qu'augmenter sa complexité et donc son coût.

Le document EP-A-0 426 345 propose un dispositif d'alimentation électrique pour un véhicule automobile conforme au préambule de la revendication 1. Mais ce dispositif ne prévoit pas de fonctionnement en parallèle à tension nominale.

La présente invention résout ces problèmes et propose à cet effet un dispositif d'alimentation électrique sous tension élevée d'un circuit auxiliaire d'un véhicule automobile dont le circuit principal comprend une charge d'utilisation principale alimentée par une batterie d'accumulateurs, le dispositif comportant, pour charger cette batterie, un premier alternateur dont le courant d'excitation est régulé par un régulateur associé et dont l'enroulement d'excitation est alimenté à partir de diodes d'excitation et un second alternateur dont le courant d'excitation est régulé par un second régulateur associé et destiné à alimenter lors d'une opération de dégivrage ou désembuage une charge auxiliaire, caractérisé en ce que ledit dispositif comprend :
- des moyens de commutation permettant en fonctionnement normal de connecter les premier et second alternateurs en parallèle de manière à les faire débiter à une tension réseau nominale dans le circuit principal ;
- des moyens de commande adaptés à détecter le déclenchement d'une opération de dégivrage ou de désembuage et commander lesdits moyens de commutation pour déconnecter les alternateurs de manière à ce que le premier alternateur continue d'alimenter la charge principale sous une tension réseau nominale et que le second alternateur alimente la charge auxiliaire sous une tension réseau élevée.

Selon un mode de réalisation de l'invention, au déclenchement d'une opération de dégivrage lesdits moyens de commande agissent sur les moyens de commutation de manière à provoquer successivement :
- la désexcitation dudit second salternateur par mise à la masse d'une entrée "sense" de son régulateur associé ;
- l'alimentation de la charge auxiliaire par le second alternateur ;
- la surexcitation du second alternateur par un décalage du point de consigne de son régulateur associé, décalage dont la valeur est déterminée par des résistances placées en série entre l'entrée du régulateur et une borne d'alimentation positive de la charge auxiliaire.

Selon d'autres modes de réalisation de l'invention :
- lors d'une opération de désembuage, les moyens de commande agissent sur les moyens de commutation de manière à provoquer un décalage du point de consigne du régulateur inférieur au décalage réalisé lors d'une opération de dégivrage.
- le décalage inférieur est obtenu par neutralisation d'une des résistances.
- les premier et second alternateurs comportent des enroulements d'excitation alimentés en permanence par un même jeu de diodes d'excitation du premier alternateur.

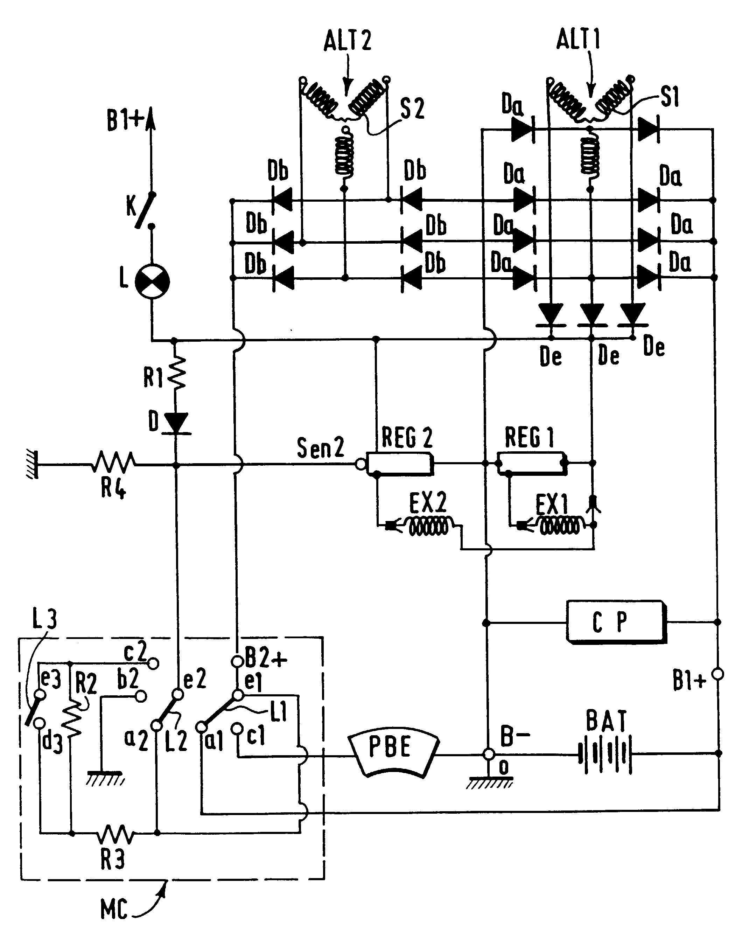

L'invention sera mieux comprise avec la description qui va suivre en regard de la figure unique qui représente un schéma fonctionnel du dispositif selon l'invention.

Selon la figure unique, le dispositif comporte un circuit principal, comprenant une charge d'utilisation principale CP alimentée par une batterie d'accumulateurs BAT. Cette batterie BAT est chargée par un premier alternateur ALT1 dont le courant d'excitation est régulé par un premier régulateur associé REG1.

L'alternateur ALT1 comprend un enroulement stator S1 associé à un ensemble redresseur consitué dans l'exemple représenté de huit diodes redresseuses Da permettant le redressement des trois phases et du point neutre. L'ensemble redresseur comprend également, de manière connue en soi, trois diodes d'excitation De reliées à l'entrée du régulateur REG1 dont la sortie commande l'enroulement d'excitation EX1.

L'ensemble redresseur est relié de manière classique aux bornes B1+ et B- et permet d'alimenter le circuit principal sous tension nominale c'est-à-dire en général une valeur continue redressée voisine de 14 Volts.

Le dispositif comprend également un circuit auxiliaire constitué d'une charge auxiliaire PBE constituée par exemple par l'élément chauffant du pare-brise du véhicule.

Bien entendu cette charge auxiliaire PBE peut tout aussi bien être constituée de l'élément chauffant du pare-brise et/ou de l'élément chauffant de la lunette arrière du véhicule.

Cette charge auxiliaire PBE est reliée d'une part à la borne B-, d'autre part à des moyens de commutation MC qui seront décrits en détail plus avant.

Le circuit auxiliaire comprend également un second alternateur ALT2 avec un enroulement stator S2 et un ensemble redresseur constitué dans l'exemple représenté de 6 diodes redresseuses Db, le point neutre de l'alternateur ALT2 n'étant pas sorti.

Le courant d'excitation du second alternateur ALT2 est régulé par un second régulateur REG2 dont l'entrée est reliée aux diodes d'excitation De de l'ensemble redresseur et la sortie du régulateur REG2 est reliée à l'enroulement d'excitation EX2.

On remarquera que, de manière avantageuse, les enroulements d'excitation EX1, EX2 sont reliés aux diodes d'excitation De.

Ainsi, les enroulements d'excitation EX1, EX2, sont en permanence alimentés par les mêmes diodes d'excitation De situées sur l'ensemble redresseur du premier alternateur ALT1.

Cette disposition permet d'avoir pour les deux alternateurs ALT1, ALT2 des rotors de conception classique.

Les diodes d'excitation De sont également reliées d'une part aux moyens de commutation MC via une résistance R1 et une diode D, d'autre part à la borne B1+ via une lampe témoin L et un interrupteur K commandé par la clé de contact du véhicule.

Le pont redresseur RED2 est relié de manière classique aux bornes B- et B2+.

Les moyens de commutation MC sont constitués de trois lames de contact L1, L2, L3, présentant chacune une borne d'entrée respectivement e1, e2 et e3.

La lame de contact L1 dont la borne d'entrée e1 est reliée à la borne B2+ comporte deux bornes de sortie a1, c1 reliées respectivement à la borne B1+ et à la charge auxiliaire PBE.

La borne d'entrée e2 de la lame de contact L2 est reliée d'une part à la diode D, d'autre part à la masse via une résistance R4 et enfin à l'entrée "sense" Sen2 du régulateur REG2.

La lame de contact L2 comporte trois bornes de sortie a2, b2, c2. La première borne de sortie a2 est reliée d'une part à la borne B2+ et d'autre part via des résistances R2 et R3 à la troisième borne de sortie c2. La seconde borne de sortie b2 est reliée à la masse.

La lame de contact L3 est en parallèle sur la résistance R2 et comporte une borne d'entrée e3 reliée à la borne de sortie c2 de la lame de contact L2 et une borne de sortie d3 reliée au point de jonction des résistances R2 et R3.

Dans des conditions normales de fonctionnement, c'est-à-dire quand aucun dégivrage ou désembuage n'est demandé les lames L1, L2, L3, occupent les positions représentées sur le schéma.

Dans cette configuration l'entrée "sense" Sen2 du régulateur REG2 est reliée à la borne B2+ via la lame L2 (position e2, a2) et la borne B2+ est reliée à la borne B1+ via la lame L1 (position e1, a1).

Autrement dit, et de manière particulièrement avantageuse, les deux alternateurs ALT1, ALT2 par leurs ensembles redresseurs sont connectés en parallèle et débitent tous deux dans le circuit principal à une tension nominale voisine de 14 Volts.

En particulier, l'entrée "sense" Sen2 du régulateur REG2 reçoit la pleine tension B2+ et auto-régule l'alternateur ALT2.

Le dispositif comprend également des moyens de commande (non représentés) adaptés à détecter un déclenchement d'opération de dégivrage ou de désembuage. Ces moyens de commande peuvent être par exemple constitués par un bouton de commande situé sur le tableau de bord du véhicule et actionné à volonté par le conducteur. Le bouton de commande peut être associé à un relais électromagnétique de manière à pouvoir agir sur les moyens de commutation précédemment décrits.

Lorsqu'une opération de dégivrage est déclenchée, lesdits moyens de commande agissent sur les moyens de commutation MC de manière à ce que la lame L2 bascule dans la position e2, b2 ce qui provoque la mise à la masse de l'entrée "sense" du régulateur REG2 et donc la désexcitation de l'alternateur ALT2.

Au bout d'un temps de l'ordre de quelques centaines de millisecondes, la lame L1 bascule dans la position e1, c1 : la charge auxiliaire PBE est reliée ainsi au B2+ et se trouve donc en condition pour être alimentée par l'alternateur ALT2 puis la lame L2 bascule dans la position e2, c2. L'entrée "sense" Sen2 du régulateur REG1 ne voit plus sur son entrée la tension B2+ comme en fonctionnement normal mais la tension B2+ diminuée de la chute de tension provoquée par les résistances R2, R3.

Il en résulte un décalage du point de consigne du régulateur REG1 qui entraîne une excitation plein champ de l'alternateur ALT2 et une augmentation de sa tension de sortie B2+.

Les résistances R2 et R3 sont calculées de manière à ce que la tension de sortie de l'alternateur ALT2 soit de l'ordre de 60 Volts.

On appréciera que dans cette configuration l'alternateur ALT1 continue de débiter dans le circuit principal et s'auto-régule de manière totalement indépendante avec son régulateur REG1.

De même, l'alternateur ALT2 débite dans le circuit auxiliaire PBE et s'auto-régule avec son régulateur REG2 autour de son nouveau point de consigne défini par les résistances R2 et R3.

Lorsqu'un désembuage est demandé, les moyens de commande agissent sur les moyens de commutation MC de manière à ce que les lames L1 et L2 occupent toujours respectivement les positions e1, c1 et e2, c2 et que la lame L3 occupe alors la position e3, d3 ce qui correspond à une neutralisation de la résistance R2.

L'entrée "sense" du régulateur REG2 est alors reliée au B2+ par la seule résistance R3 ce qui modifie à nouveau son point de consigne mais avec un décalage inférieur à celui provoqué lors d'un dégivrage. Ce décalage permet à l'alternateur ALT2 de s'auto-réguler autour d'une tension de l'ordre de 30 Volts.

Lors d'une opération de dégivrage on a vu que la lame L2 des moyens de commutation MC mettait à la masse l'entrée "sense" Sen2 du second régulateur REG2 pour provoquer la désexcitation de l'alternateur ALT2.

Quand la lame L2 passe de la position c2, b2 à la position e2, c2, il est nécessaire de prévoir des moyens de réamorçage du régulateur REG2. En effet, l'entrée "sense" Sen2 continue d'être reliée à la masse via les résistances R2 et R3 et la charge auxiliaire PBE.

Pour que le régulateur se réamorce, il est nécessaire d'appliquer à l'entrée "sense" Sen2 un potentiel inférieur au seuil de régulation (pour éviter un blocage de la régulation) et supérieur à une valeur de 4 Volts de manière à ce que le régulateur REG2 permette une excitation maximum (dit de plein champ) du second alternateur ALT2.

Les moyens de réamorçage du régulateur REG2 sont ici constitués de la diode D placée en série avec une résistance R, l'ensemble étant relié et donc alimenté par les diodes d'excitation De du premier alternateur ALT1.

Dans l'exemple représenté les moyens de commutation MC comportent trois lames L1, L2, L3 qui peuvent être commandées par exemple par un relais électromagnétique. Il va de soi que ces trois lames sont en fait des moyens de commutation et qu'elles peuvent être réalisées à l'aide d'éléments semi-conducteurs tels que des transistors sans pour cela sortir du cadre de l'invention.

## Revendications

1. Dispositif d'alimentation électrique sous tension élevée d'un circuit auxiliaire d'un véhicule automobile dont le circuit principal comprend une charge d'utilisation principale (CP) alimentée par une batterie d'accumulateurs (BAT), le dispositif comportant, pour charger cette batterie (BAT), un premier alternateur (ALT1) dont le courant d'excitation est régulé par un premier régulateur associé (REG1) et dont l'enroulement d'excitation (EX1) est alimenté à partir de diodes d'excitation (De) et un second alternateur (ALT2) dont le courant d'excitation est régulé par un second régulateur associé (REG2) et destiné à alimenter lors d'une opération de dégivrage ou désembuage une charge auxiliaire (PBE), caractérisé en ce que ledit dispositif comprend :
- des moyens de commutation (MC) permettant en fonctionnement normal de connecter les premier et second alternateurs (ALT1, ALT2) en parallèle de manière à les faire débiter à une tension réseau nominale dans le circuit principal ;
- des moyens de commande adaptés à détecter le déclenchement d'une opération de dégivrage ou de désembuage et commander lesdits moyens de commutation (MC) pour déconnecter les alternateurs (ALT1, ALT2) de manière à ce que le premier alternateur (ALT1) continue d'alimenter la charge principale (CP) sous une tension réseau nominale et que le second alternateur (ALT2) alimente la charge auxiliaire (PBE) sous une tension réseau élevée.

2. Dispositif selon la revendication 1,
caractérisé en ce que, au déclenchement d'une opération de dégivrage, lesdits moyens de commande agissent sur lesdits moyens de commutation (MC) de manière à provoquer successivement :
- la désexcitation dudit second alternateur (ALT2) par mise à la masse d'une entrée "sense" de son régulateur associé (REG2);
- l'alimentation de la charge auxiliaire (PBE) par le second alternateur (ALT2);
- la surexcitation du second alternateur (ALT2) par un décalage du point de consigne de son régulateur associé (REG2), décalage dont la valeur est déterminée par des résistances (R2,R3) placées en série entre l'entrée (Sen2) du régulateur (REG1) et une borne d'alimentation positive (B2+) de la charge auxiliaire (PBE).

3. Dispositif selon la revendication 2, caractérisé en ce que lors d'une opération de désembuage, les moyens de commande agissent sur les moyens de commutation (MC) de manière à provoquer un décalage du point de consigne du régulateur (REG2) inférieur au décalage réalisé lors d'une opération de dégivrage.

4. Dispositif selon la revendication 3, caractérisé en ce que le décalage inférieur est obtenu par neutralisation d'une des résistances (R2).

5. Dispositif selon l'une des revendications précédentes, caractérisé en ce que les premier et second alternateurs (ALT1,ALT2) comportent des enroulements d'excitation (EX1,EX2) alimentés en permanence par un même jeu de diodes d'excitation (De) du premier alternateur (ALT1).

6. Dispositif selon l'une des revendications précédentes, caractérisé en ce qu'il comprend, lors d'une opération de dégivrage et/ou de désembuage, des moyens de réamorçage du second régulateur (REG2) constitués d'une diode (D) en série avec une résistance (R1), ladite résistance étant reliée aux diodes d'excitation (De) du premier alternateur (ALT1).

## Patentansprüche

1. Vorrichtung zur Stromversorgung eines Hilfsstromkreises eines Kraftfahrzeugs mit erhöhter Spannung, deren Hauptstromkreis einen Hauptverbraucher (CP) enthält, der durch eine Akkumulatorenbatterie (BAT) gespeist wird, wobei die Vorrichtung zur Ladung dieser Batterie (BAT) einen ersten Wechselstromgenerator (ALT1), dessen Erregerstrom durch einen zugehörigen Regler (REG1) geregelt wird und dessen Erregerwicklung (EX1) über Erregerdioden (De) gespeist wird, und einen zweiten Wechselstromgenerator (ALT2) umfaßt, dessen Erregerstrom durch einen zweiten zugehörigen Regler (REG2) geregelt wird und dessen Aufgabe in der Stromversorgung eines Hilfsverbrauchers (PBE) bei einem Entfrostungs- oder Beschlagentfernungsvorgang besteht, **dadurch gekennzeichnet**, daß die besagte Vorrichtung die folgenden Bestandteile umfaßt:
- Schalteinrichtungen (MC), um im Normalbetrieb den ersten und zweiten Wechselstromgenerator (ALT1, ALT2) parallelzuschalten, so daß sie Strom mit einer Nenn-Netzspannung in den Hauptstromkreis einspeisen,
- geeignete Steuereinrichtungen, um die Auslösung eines Entfrostungs- oder Beschlagentfernungsvorgangs zu erfassen und die besagten Schalteinrichtungen (MC) anzusteuern, um die Wechselstromgeneratoren (ALT1, ALT2) zu trennen, so daß der erste Wechselstromgenerator (ALT1) weiterhin den Hauptverbraucher (CP) mit einer Nenn-Netzspannung speist, während der zweite Wechselstromgenerator (ALT2) den Hilfsverbraucher (PBE) mit einer erhöhten Netzspannung speist.

2. Vorrichtung nach Anspruch 1 , **dadurch gekennzeichnet**, daß bei der Auslösung eines Entfrostungsvorgangs die besagten Steuereinrichtungen so auf die besagten Schalteinrichtungen (MC) einwirken, daß nacheinander die folgenden Vorgänge bewirkt werden:
- die Aberregung des besagten zweiten Wechselstromgenerators (ALT2) durch die Masseverbindung eines "Sense"-Eingangs seines zugehörigen Reglers (REG2);
- die Stromversorgung des Hilfsverbrauchers (PBE) durch den zweiten Wechselstromgenerator (ALT2);
- die Übererregung des zweiten Wechselstromgenerators (ALT2) durch eine Verschiebung des Sollwerts seines zugehörigen Reglers (REG2), wobei der Wert dieser Verschiebung durch Widerstände (R2, R3) bestimmt wird, die zwischen dem Eingang (Sen2) des Reglers (REG1) und einer Speiseplusklemme (B2+) des Hilfsverbrauchers (PBE) in Reihe geschaltet sind.

3. Vorrichtung nach Anspruch 2 , **dadurch gekennzeichnet**, daß bei einem Beschlagentfernungsvorgang die Steuereinrichtungen so auf die Schalteinrichtungen (MC) einwirken, daß eine Verschiebung des Sollwerts des Reglers (REG2) bewirkt wird, die kleiner als die Verschiebung ist, die bei einem Entfrostungsvorgang ausgeführt wird.

4. Vorrichtung nach Anspruch 3 , **dadurch gekennzeichnet**, daß die kleinere Verschiebung durch Neutralisierung eines der Widerstände (R2) bewirkt wird.

5. Vorrichtung nach einem der vorangehenden Ansprüche, **dadurch gekennzeichnet,** daß der erste und zweite Wechselstromgenerator (ALT1, ALT2) Erregerwicklungen (EX1, EX2) umfassen, die ständig durch einen gleichen Satz Erregerdioden (De) des ersten Wechselstromgenerators (ALT1) gespeist werden.

6. Vorrichtung nach einem der vorangehenden Ansprüche, **dadurch gekennzeichnet**, daß sie bei einem Entfrostungs- und/oder Beschlagentfernungsvorgang Rückstelleinrichtungen für den zweiten Regler (REG2) umfassen, die aus einer Diode (D) bestehen, die mit einem Widerstand (R1) in Reihe geschaltet ist, wobei der besagte Widerstand mit den Erregerdioden (De) des ersten Wechselstromgenerators (ALT1) verbunden ist.

## Claims

1. Apparatus for the high voltage electrical supply of an auxiliary circuit of a motor vehicle, the main circuit of which includes a main functional load (CP) which is supplied by a battery (BAT) of wet cells, the apparatus including, for charging the said battery (BAT), a first alternator (ALT1), the excitation current of which is regulated by an associated first regulator (REG1), and the excitation winding (EX1) of which is supplied from excitation diodes (De), and a second alternator (ALT2), the excitation current of which is regulated by an associated second regulator (REG2), and which is arranged to supply an auxiliary charge (PBE) during a de-icing or de-misting operation, characterised in that the said apparatus includes:
- switching means (MC) for connecting, in normal operation, the first and second alternators (ALT1, ALT2) in parallel in such a way as to cause them to feed into the main circuit at a nominal network voltage;
- control means adapted to detect the start of a de-icing or de-misting operation, and to control the said switching means (MC) in order to disconnect the alternators (ALT1, ALT2), in such a way that the first alternator (ALT1) continues to supply the main load (CP) at a nominal network voltage, and so that the second alternator (ALT2) supplies the auxiliary load (PBE) at a high network voltage.

2. Apparatus according to Claim 1, characterised in that, at the beginning of a de-icing operation, the said control means act on the said switching means (MC) in such a way as to cause, in succession:
- the de-excitation of the said second alternator (ALT2) by earthing a "sense" input of its associated regulator (REG2);
- the supply of the auxiliary load (PBE) by the second alternator (ALT2);
- the super-excitation of the second alternator (ALT2) by an offset of the datum point of its associated regulator (REG2), the value of the said offset being determined by resistances (R2, R3) connected in series between the input (Sen2) of the regulator (REG1) and a positive supply terminal (B2+) of the auxiliary load (PEE).

3. Apparatus according to Claim 2, characterised in that, during a de-misting operation, the control means act on the switching means (MC) in such a way as to cause an offset of the datum point of the regulator (REG2) which is smaller than the offset obtained during a de-icing operation.

4. Apparatus according to Claim 3, characterised in that the lower offset is obtained by neutralisation of one of the resistances (R2).

5. Apparatus according to one of the preceding Claims, characterised in that the first and second alternators (ALT1, ALT2) include excitation windings (EX1, EX2) which are permanently supplied through a common set of excitation diodes (De) of the first alternator (ALT1).

6. Apparatus according to one of the preceding Claims, characterised in that it includes, during a de-icing and/or de-misting operation, means for recharging the second regulator (REG2), comprising a diode (D) in series with a resistor (R1), the said resistor being connected to the excitation diodes (De) of the first alternator (ALT1).
